# FASCICULE DE BREVET EUROPEEN

(11) **EP 2 005 554 B1**
(45) Date de publication et mention de la délivrance du brevet: **20.04.2011**
(21) Numéro de dépôt: 07731736.0
(22) Date de dépôt: 13.03.2007
(51) Int. Cl.: H02K 1/22

(54) **ROTOR DE MACHINE ELECTRIQUE TOURNANTE COMPORTANT DES GORGES POUR AIMANTS**
ROTOR FÜR EINE ELEKTRISCHE ROTORMASCHINE MIT RILLEN FÜR MAGNETE
ROTOR FOR A ROTOR ELECTRICAL MACHINE COMPRISING GROOVES FOR MAGNETS

(30) Priorité: 10.04.2006 FR 0651297
(43) Date de publication de la demande: 24.12.2008
(73) Titulaire: VALEO EQUIPEMENTS ELECTRIQUES MOTEUR, 94046 Créteil Cedex (FR)
(72) Inventeur: RIGAUD, Stéphane, F-94410 Saint Maurice (FR); TUNZINI, Marc, F-78000 Versailles (FR)
(74) Mandataire: de Lambilly Delorme, Marie Pierre
(86) Numéro de dépôt international: PCT/FR2007/050920
(87) Numéro de publication internationale: WO 2007/116161

(56) Documents cités:
- EP-A- 1 643 615
- EP-A1- 1 643 615
- US-A1- 2005 236 927
- US-B1- 6 486 585
- US-B1- 6 897 597

## Description

L'invention concerne un rotor de machine électrique tournante qui comporte deux roues polaires parallèles qui s'étendent radialement par rapport à un axe principal du rotor, dont chacune comporte une série de dents axiales de forme globalement trapézoïdale qui s'étendent axialement depuis le bord d'extrémité radiale externe de la dite roue polaire; en direction de l'autre roue polaire, de manière que chaque dent d'une roue polaire est située dans l'espace existant entre deux dents consécutives de l'autre roue polaire, et qui comporte des éléments magnétiques, tels que des aimants permanents, dont chacun est agencé entre deux dents adjacentes appartenant chacune à l'une des deux roues polaires, et est reçu en partie dans une gorge réalisée dans chacune des faces latérales en vis-à-vis des dites deux dents adjacentes, de manière qu'au moins une des deux faces latérales d'une première dent des dites deux dents adjacentes, comporte une gorge dans laquelle est reçu en partie un élément magnétique, et de manière que chaque gorge qui est réalisée dans une face latérale d'une dent du rotor, soit débouchante au niveau d'une première extrémité axiale de la dent, au niveau de laquelle la première dent est reliée au bord d'extrémité radiale externe de la roue polaire, ou au niveau d'une deuxième extrémité axiale libre de la dent. Le nombre d'éléments magnétiques peut être inférieur au nombre de dent d'une roue polaire.

Selon un mode de réalisation connu, les deux gorges qui sont réalisées dans deux faces en vis-à-vis de deux dents adjacentes sont réalisées par l'intermédiaire d'un outil unique, par exemple une fraise, après que les deux roues polaires du rotor aient été montées sur un arbre central du rotor.

Il est aussi connu de réaliser toutes les gorges du rotor de manière qu'elles soient débouchantes au niveau d'une même extrémité axiale du rotor.

Le document US 6 486 585 divulgue un alternateur deux roues polaires.

Par conséquent, lorsque les deux faces latérales d'une même dent d'une roue polaire comportent chacune une gorge recevant un élément magnétique, les deux gorges sont débouchantes axialement soit au niveau d'une première extrémité axiale de la dent au niveau de laquelle la dent est reliée bord de l'extrémité radiale de la roue polaire, soit au niveau de l'extrémité axiale libre de la dent, aussi appelée pointe de la dent.

La première extrémité axiale de la dent, aussi appelée base de la dent, au niveau de laquelle la dent est reliée à la roue polaire, est alors rendue moins résistante à la déformation lorsque les deux gorges de la dent sont débouchantes au niveau de cette base de la dent, par rapport à un mode de réalisation selon lequel les deux gorges sont débouchantes au niveau de l'extrémité axiale libre de la dent.

Ainsi, lors de la rotation du rotor à une vitesse élevée, la réduction de la résistance à la déformation de la base de la dent a pour conséquence que la dent se déforme radialement par rapport au rotor, il y a alors un risque que la dent vienne en contact avec le stator de la machine électrique tournante.

L'invention a pour but de proposer un rotor de machine électrique tournante pour lequel les gorges recevant les éléments magnétiques sont réalisées de manière que la réduction de la résistance élastique à la déformation de la base de chaque dent soit limitée.

Dans ce but, l'invention propose un rotor du type décrit précédemment, caractérisé en ce que chacune des dites deux dents adjacentes comporte une gorge au maximum, qui est débouchante au niveau de la base de ladite première dent.

Selon d'autres caractéristiques de l'invention :
- chacune des dites deux dents adjacentes comporte une gorge réalisée uniquement dans une de ses faces latérales les deux gorges étant en vis à vis, et la gorge qui est réalisée dans la dite face latérale de la première dent est débouchante au niveau de la base de la première dent, et la gorge qui est réalisée dans la dite face latérale de la deuxième dent desdites deux dents adjacentes, est débouchante au niveau de la pointe de la deuxième dent ;
- les deux faces latérales de la première dent comportent chacune une gorge ;
- les deux gorges qui sont réalisées dans les deux faces latérales de la première dent, sont débouchantes au niveau de la pointe de la première dent ;
- une première des deux gorges qui sont réalisées dans les faces latérales de la première dent, est débouchante au niveau de la base de la première dent, et la deuxième desdites deux gorges qui sont réalisées dans les faces latérales de la première dent, est débouchante au niveau de la pointe de la première dent ;
- chacune des deux faces latérales de chaque dent comporte une gorge qui reçoit en partie un élément magnétique, et une seule face latérale de chaque dent comporte une gorge qui est débouchante au niveau de la base de la dent associée, l'autre face latérale de la dent comportant une gorge qui est débouchante au niveau de l'extrémité axiale libre de la dent aussi appelée pointe de la dent;
- les deux gorges qui sont réalisées dans les faces en vis-à-vis de deux dents adjacentes, et qui reçoivent un même élément magnétique, sont toutes les deux débouchantes au niveau d'une même extrémité axiale du rotor ; l'aimant ou l'élément magnétique est introduit entre les deux dents du coté où débouche les gorges adjacentes.
- toutes les gorges sont débouchantes au niveau d'une même extrémité axiale du rotor ;
- toutes les gorges qui sont aptes à recevoir un élément magnétique qui est situé entre une dent d'une première roue polaire et une dent de la deuxième roue polaire qui est située angulairement en amont de la dite dent de la première roue polaire sont débouchantes au niveau d'une première extrémité axiale du rotor, et toutes les gorges qui sont aptes à recevoir un élément magnétique qui est situé entre une dent d'une première roue polaire et une dent de la deuxième roue polaire qui est située angulairement en aval de la dite dent de la première roue polaire sont débouchantes au niveau d'une deuxième extrémité axiale du rotor ;

- le nombre d'éléments magnétiques est égal au nombre total de dents du rotor ;
- le nombre d'éléments magnétiques est inférieur au nombre total de dents du rotor ;
- le rotor comporte au moins une paire d'éléments magnétiques, dont chaque élément magnétique de la paire est agencé, angulairement par rapport à l'axe principal du rotor, de part et d'autre de la première dent ;
- le nombre d'éléments magnétiques est égal au nombre de dents que comporte une seule roue polaire, et chaque élément magnétique est reçu entre une dent d'une première roue polaire et une dent de la deuxième roue polaire qui est située angulairement, par rapport à l'axe principal du rotor, en amont de la dite dent de la première roue polaire. L'élément magnétique est donc toujours situé du même coté de chaque dent de la première roue polaire.

L'invention propose aussi un procédé de réalisation d'un rotor, qui comporte :
- une étape d'assemblage des deux roues polaires de manière que chaque dent d'une roue polaire soit située dans l'espace existant entre deux dents consécutives de l'autre roue polaire ;
- une étape d'usinage des faces latérales des dents pour réaliser les gorges recevant les éléments magnétiques, de manière que chacune des deux faces latérales de chaque dent comporte une gorge qui est apte à recevoir en partie un élément magnétique; et
- une étape de montage de chaque élément magnétique dans deux gorges qui sont réalisées dans les faces en vis-à-vis de deux dents adjacentes,
   caractérisé en ce que l'étape d'usinage comporte une première phase de réalisation des gorges qui sont débouchantes au niveau d'une première extrémité axiale du rotor, puis une deuxième phase de réalisation des gorges qui sont débouchantes au niveau d'une deuxième extrémité axiale du rotor.

De cette manière les gorges qui sont aptes à recevoir un élément magnétique qui est situé entre une dent d'une première roue polaire et une dent de la deuxième roue polaire qui est située angulairement en amont de la dite dent de la première roue polaire soient débouchantes au niveau d'une première extrémité axiale du rotor, et les gorges qui sont aptes à recevoir un élément magnétique qui est situé entre une dent d'une première roue polaire et une dent de la deuxième roue polaire qui est située angulairement en aval de la dite dent de la première roue polaire sont débouchantes au niveau d'une deuxième extrémité axiale du rotor. On usine ainsi une fois d'un coté du rotor et une fois de l'autre coté. Les gorges présentent un angle par rapport à la base des roues polaires; en effet chaque dent étant de forme trapézoïdale, la zone interpolaire forme un angle vers la droite sur le coté gauche de la dent et un angle à gauche sur le coté droit de la dent. L'usinage se fait donc avec un angle différent selon le coté de la dent. On peut ainsi, par exemple, réaliser toutes les gorges orientées vers la gauche, soit le coté droit de la dent considérée, puis toutes les gorges orientées à droite, soit le coté gauche de la dent considérée.

Selon d'autres caractéristiques du procédé selon l'invention :
- chaque phase de l'étape d'usinage consiste à réaliser simultanément les deux gorges d'une paire de gorges, qui sont aptes à recevoir un même élément magnétique.
- chaque phase de l'étape d'usinage consiste à réaliser successivement les paires de gorges qui sont débouchantes au niveau d'une même extrémité axiale du rotor.

D'autres caractéristiques et avantages de l'invention apparaîtront à la lecture de la description détaillée qui suit pour la compréhension de laquelle on se reportera aux figures annexées parmi lesquelles :
- la figure 1 est représentation schématique en perspective des roues polaires d'un rotor de machine électrique tournante, qui comporte des aimants montés dans des gorges réalisées dans les dents conformément à l'invention;
- la figure 2 est un développement linéaire partiel avec arrachement des dents axiales des deux roues polaires représentées à la figure 1, montrant un premier mode de réalisation des gorges selon l'invention ;
- la figure 3 est une vue similaire à celle de la figure 2, montrant un deuxième mode de réalisation de l'invention ;
- la figure 4 est une vue similaire à celles des figures 2 et 3, montrant un troisième mode de réalisation de l'invention ;
- la figure 5 est une vue similaire à celles des figures 2, 3 et 4, montrant un quatrième mode de réalisation de l'invention.

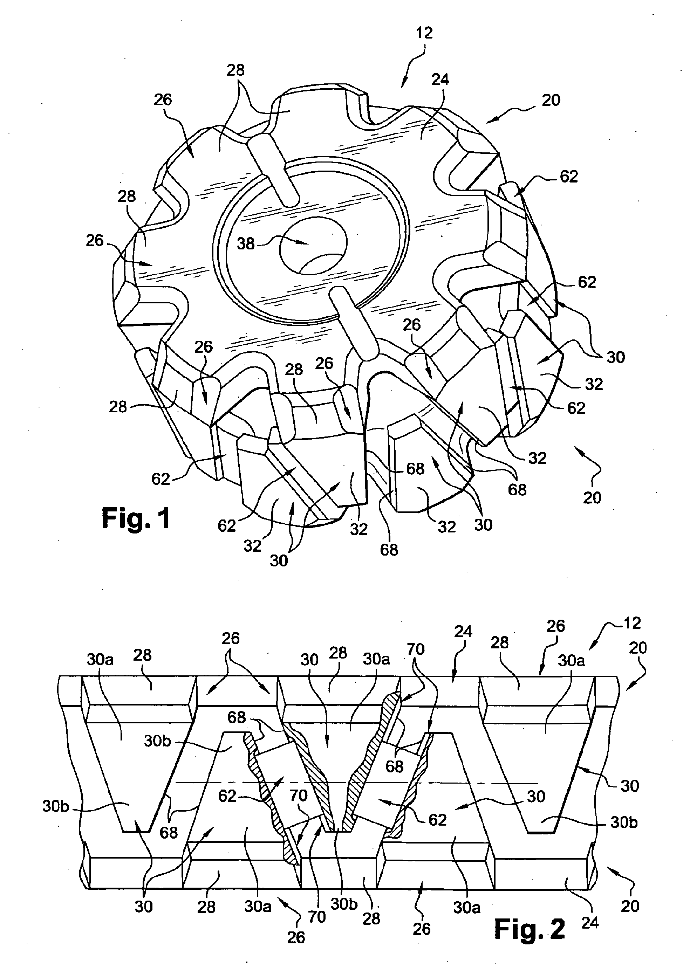

Dans la description de l'invention qui va suivre, on utilisera l'orientation d'amont en aval commue étant la direction tangentielle par rapport à l'axe principal du rotor et de gauche à droite en se reportant à la figure 2. L'orientation inférieure correspond à la partie basse des figures 1 à 5.

On a représenté à la figure 1, un rotor 12 de machine électrique tournante, comme par exemple un alternateur du type triphasé pour véhicule automobile à moteur thermique, ou un alterno-démarreur permettant notamment de démarrer le moteur thermique d'un véhicule.

Le rotor 12 est un rotor du type à griffes, il comporte deux roues polaires 20 juxtaposées axialement et présentant chacune un flasque radial 24 de forme annulaire qui est pourvu à sa périphérie extérieure de griffes 26.

Un bobinage d'excitation (non représenté) est implanté axialement entre les flasques 24 des roues polaires 20 et il est porté par une partie du rotor 12 en forme d'un noyau cylindrique (non représenté) coaxial aux roues polaires 20.

Chaque griffe 26 comporte un tronçon d'enracinement 28 qui est prolongé à sa périphérie extérieure par une dent 30 d'orientation principale axiale par rapport à l'axe principal du rotor 12.

Les dents 30 sont globalement de forme trapézoïdale et sont dirigées axialement vers le flasque 24 de l'autre roue polaire 20, la dent 30 d'une roue polaire 20 étant reçue dans l'espace existant entre deux dents 30 consécutives de l'autre roue polaire 20, de sorte que les dents 30 des roues polaires 20 soient imbriquées.

Chaque dent 30 comporte notamment une face d'extrémité axiale externe 32, et deux faces latérales 68 globalement planes, formant deux des côtés du trapèze.

Chaque face latérale 68 d'une première dent 30 appartenant à une première roue polaire 20 s'étend parallèlement et à distance sensiblement constante d'une face latérale 68 en vis-à-vis d'une deuxième dent 30 appartenant à l'autre roue polaire 20.

Par la suite, deux dents 30, dont chacune appartient à l'une des roues polaires 20, et possédant une face latérale 68 en vis-à-vis de la face latérale 68 de l'autre dent 30, seront désignées comme étant deux dents 30 adjacentes.

Le rotor 12 comporte aussi des éléments magnétiques 62 tels que des aimants permanents, qui sont interposés entre deux dents 30 adjacentes, pour réduire les fuites de flux magnétique au niveau de l'espace entre deux dents 30 adjacentes, et pour renforcer le flux magnétique.

Selon un mode de réalisation, le nombre de ces aimants 62 est déterminé de façon qu'il soit inférieur au nombre de dents 30 du rotor 12.

Dans le mode de réalisation du rotor représenté à la figure 1, chaque roue polaire 20 du rotor 12 comporte huit dents 30, le rotor 12 comporte donc huit paires de pôles.

Le nombre des aimants 62 du rotor 12 peut être déterminé de manière qu'il soit inférieur au nombre de pôles du rotor 12, par exemple, huit aimants 62 pour huit paires de pôles.

Comme on peut le voir aux figures 2 à 5, chaque aimant 62 qui est interposé entre deux dents 30 adjacentes, est reçu dans une gorge 70 réalisée dans chacune des faces latérales 68 en vis-à-vis des deux dents 30 adjacentes.

Chaque gorge 70, qui est réalisée dans une face latérale 68 d'une dent 30 s'étend suivant la direction globalement axiale de la face latérale 68 de la dent 30, entre une base 30a de la dent 30 au niveau de laquelle la dent 30 est reliée au tronçon d'enracinement 28 de la griffe 26 et donc au bord d'extrémité radiale externe de la roue polaire 20, et une deuxième extrémité axiale libre 30b de la dent 30, aussi appelée pointe de la dent.

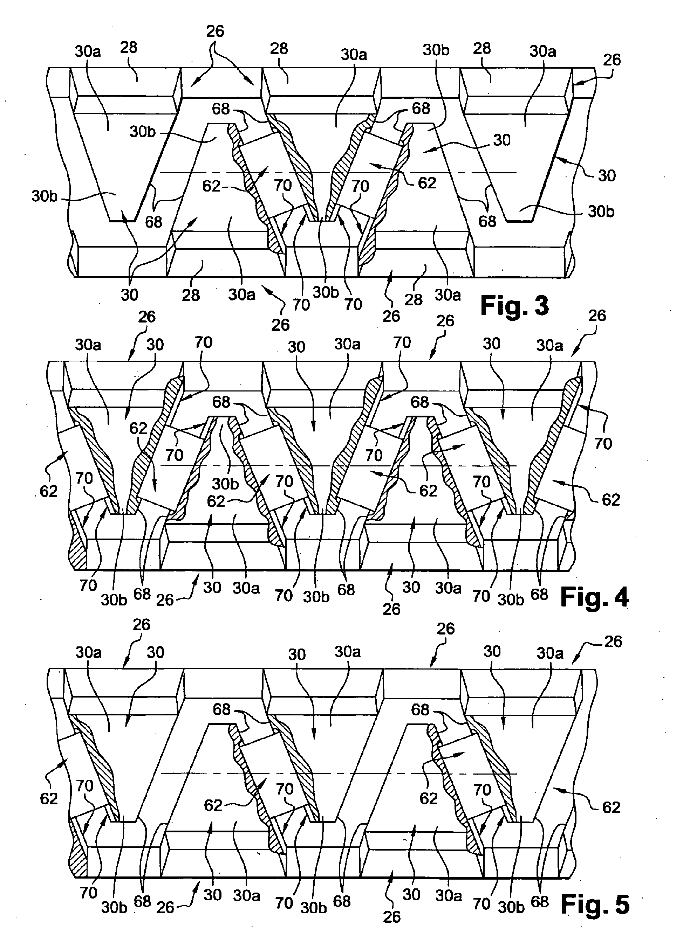

Selon un mode de réalisation connu, les deux gorges 70 qui sont réalisées dans les deux faces latérales 68 en vis-à-vis de deux dents 30 adjacentes sont réalisées simultanément, par exemple par fraisage, de manière que les deux gorges 70 soient toutes les deux débouchantes au niveau de leurs extrémités axiales situées au niveau d'une même extrémité axiale du rotor 12, par exemple l'extrémité axiale inférieure, comme on l'a représenté à la figure 3 de façon à faciliter l'introduction de l'élément magnétique.

Par conséquent, et comme on peut le voir aux figures 2 à 5, l'une des deux gorges 70 qui sont réalisées dans les faces latérales 68 en vis-à-vis et qui reçoivent un même aimant 62, est débouchante au niveau de la base 30a de la dent 30, de la première roue polaire 20, dans laquelle la gorge est réalisée, et l'autre gorge 70 est débouchante au niveau de la pointe 30b de la dent 30, de la deuxième roue polaire 20, dans laquelle cette deuxième gorge 70 est réalisée.

Conformément à l'invention, chaque dent 30 qui comporte une gorge 70 réalisée dans l'une et/ou l'autre de ses faces latérales 68, c'est à dire chacune des deux dents 30 adjacentes, comporte une gorge 70 au maximum qui est débouchante au niveau de la base 30a de la dent 30.

Ainsi, une seule gorge 70 de chaque dent 30, ou bien aucune gorge 70 de chaque dent 30 est débouchante au niveau de la base 30a de la dent 30.

On a représenté aux figures 2 et 3 un premier mode de réalisation de l'invention selon laquelle le rotor 12 comporte un nombre d'aimants 62 qui est inférieur au nombre de pôles du rotor 12, c'est-à-dire inférieur au nombre de dents 30 du rotor 12. Les aimants 62 peuvent être montés par paires.

Les deux aimants 62 d'une même paire sont agencés de part et d'autre d'une dent 30 de l'une des deux roues polaires 20, que l'on désignera par la suite première dent 30.

Chacune des deux faces latérales 68 de la première dent 30 comporte par conséquent une gorge 70 recevant l'un des deux aimants 62 de la paire d'aimants, et la face latérale 68 de chacune des deux dents 30 de l'autre roue polaire 20 adjacentes à la première dent 30, qui est en vis-à-vis d'une face latérale 68 de la première dent 30, comporte elle aussi une gorge 70 recevant l'un des deux aimant 62.

Conformément à l'invention, au maximum une gorge 70 qui est réalisée dans l'une des faces latérales 68 de la première dent 30, est débouchante au niveau de la base 30a de la première dent 30.

Selon un premier mode de réalisation de l'invention représenté à la figure 2, une gorge 70 est débouchante au niveau de la base 30a de la première dent 30, ici la gorge 70 qui est située en aval de la première dent 30.

Par conséquent, l'autre gorge 70 qui est réalisée dans la première dent 30, et qui est située en amont de la première dent 30, est débouchante au niveau de la deuxième extrémité axiale libre 30b de la première dent 30, et elle est non débouchante au niveau de la base 30a de la première dent 30.

De plus, la gorge 70 qui est réalisée dans la face latérale 68 de la dent 30 adjacente à la première dent 30 et qui est située en amont de la première dent 30, est débouchante au niveau de la base 30a de la dite dent 30, et la gorge 70 qui est réalisée dans la face latérale 68 de la dent 30 adjacente à la première dent 30 et qui est située en aval de la première dent 30, est débouchante au niveau de la pointe 30b de la dite dent 30

Par conséquent, les deux gorges 70 qui reçoivent l'aimant 62 situé en amont de la première dent 30 sont débouchantes au niveau d'une première extrémité axiale du rotor 12, ici l'extrémité axiale inférieure, et les deux gorges 70 recevant l'aimant 62 situé en aval de la première dent 30 sont débouchantes au niveau de la deuxième extrémité axiale du rotor 12, ici l'extrémité axiale supérieure.

On a représenté à la figure 3, un deuxième mode de réalisation de l'invention selon laquelle aucune des deux gorges 70 réalisées dans les faces latérales 68 de la première dent 30 n'est débouchante au niveau de la base 30a de la première dent 30, c'est-à-dire qu'elles sont débouchantes au niveau de la pointe 30b de la dent 30.

Par conséquent, la gorge 70 qui est réalisée dans la face latérale 68 de chacune des deux dents 30 adjacentes à la première dent 30, est débouchante au niveau de la base 30a de la dite dent 30.

Selon cette variante de réalisation, toutes les gorges 70 qui reçoivent les aimants 62 de la paire d'aimants 62 associée à la première dent 30 sont débouchantes au niveau d'une même extrémité axiale du rotor 12, qui est ici l'extrémité axiale inférieure en se reportant à la figure 3.

On a représenté à la figure 4, un troisième mode de réalisation de l'invention selon laquelle le rotor 12 comporte un nombre de paires d'aimants 62 qui est égal au nombre de pôles du rotor 12.

Par conséquent, le rotor 12 comporte un aimant 62 qui est agencé dans chaque espace existant entre deux dents 30 adjacentes, et chaque dent 30 du rotor 12 comporte une gorge 70 réalisée dans chacune de ses deux faces latérales 68, qui reçoit un aimant 62. Il y a donc autant d'élément magnétiques que d'espace interpolaire.

Conformément à l'invention, une seule gorge 70 qui est réalisée dans chaque dent 30 est débouchante au niveau de la base 30a de la dent, c'est-à-dire qu'elle est non débouchante au niveau de la pointe 30b de la dent 30, et l'autre gorge 70 de la dent 30 est débouchante au niveau de la pointe 30b de la dent 30, et donc elle est non débouchante au niveau de la base 30a de la dent 30.

On constate alors que les gorges 70 qui reçoivent les aimants 62 situés à un premier coté des dents 30 d'une première roue polaire 20, sont toutes débouchantes au niveau d'une même extrémité axiale du rotor 12, et de manière réciproque, les gorges 70 qui reçoivent les aimants 62 situés de l'autre coté des dents 30 de la première roue polaire 20, sont toutes débouchantes au niveau de l'autre extrémité axiale du rotor 12. Les gorges sont ainsi alternativement et successivement débouchantes en haut ou en bas.

Par exemple ici, les gorges 70 qui reçoivent les aimants 62 situés en aval des dents 30 de la roue polaire inférieure 20 sont débouchantes au niveau de l'extrémité axiale inférieure du rotor 12, et les gorges 70 qui reçoivent les aimants 62 situés en amont des dents 30 de la roue polaire inférieure 20 sont débouchantes au niveau de l'extrémité axiale supérieure du rotor 12.

On a représenté à la figure 5 encore un quatrième mode de réalisation de l'invention selon lequel le rotor 12 comporte un nombre d'aimants 62 qui est égal au nombre de dents 30 que comporte une seule roue polaire 20. De plus, selon ce mode de réalisation, une seule face latérale 68 de chaque dent 30 comporte une gorge 70.

Ainsi, chaque dent 30 d'une roue polaire 22 est associée à un seul aimant 62, et deux dents 30 adjacentes appartenant chacune à l'une des deux roues polaires 20 et qui sont agencées de part et d'autre d'un aimant 62, sont associées uniquement à cet aimant 62.

Conformément à l'invention, la gorge 70 qui est réalisée dans une face latérale 68 d'une première dent 30, par exemple ici une dent 30 de la roue polaire 20 inférieure, est débouchante au niveau de la base 30a de la première dent 30, et la gorge 70 qui est réalisée dans la face latérale 68 en vis-à-vis de l'autre dent 30 est débouchante au niveau de la pointe 30b de la deuxième dent 30.

Ainsi, toutes les gorges sont débouchantes au niveau d'une même extrémité axiale du rotor 12, ici l'extrémité inférieure du rotor 12.

L'invention concerne aussi un procédé pour réaliser un rotor 12 selon lequel les gorges 70 qui reçoivent les aimants 62 débouchent axialement au niveau de l'extrémité axiale supérieure ou au niveau de l'extrémité axiale inférieure du rotor 12, comme c'est le cas par exemple pour le mode de réalisation du rotor selon l'invention qui a été représenté à la figure 4.

Ce procédé comporte une première étape d'assemblage des deux roues polaire 20 l'une avec l'autre, notamment en les montant toutes les deux sur un arbre central (non représenté) du rotor 12.

Le procédé comporte une deuxième étape de réalisation des gorges 70 dans les faces latérales 68 des dents 30 par usinage.

Selon un mode de réalisation préféré, l'étape d'usinage des faces latérales 68 des dents 30 consiste en une étape de fraisage des dents 30, de manière à réaliser simultanément les deux gorges 70 d'une même paire de gorges 70, qui sont aptes à recevoir un même aimant 62.

Pour cela, la fraise utilisée pour réaliser les gorges 70 entame les dents 30 par leur extrémité au niveau de laquelle les gorges 70 sont débouchantes. C'est-à-dire par les extrémités 30a, 30b des dents 30 situées à proximité de l'extrémité inférieure du rotor 12 lorsque les deux gorges sont débouchantes au niveau de l'extrémité inférieure du rotor 12, et/ou par les extrémités 30a, 30b des dents 30 situées à proximité supérieure du rotor 12 lorsque les deux gorges sont débouchantes au niveau de l'extrémité supérieure du rotor 12.

Enfin, le procédé comporte une étape de montage des aimants 62 dans les gorges 70, en les introduisant par les extrémités débouchantes des gorges 70.

Selon le mode de réalisation du rotor 12 qui est représenté à la figure 4, les paires de gorges 70, qui reçoivent chacune un aimant 62, sont alternativement débouchantes au niveau de l'extrémité axiale supérieure ou au niveau de l'extrémité axiale inférieure du rotor 12.

Conformément à l'invention, l'étape d'usinage comporte une première phase de réalisation des gorges 70 qui sont débouchantes au niveau d'une première extrémité du rotor 12, par exemple supérieure, puis une deuxième phase d'usinage des autres gorges 70, qui sont débouchantes au niveau de l'autre extrémité du rotor 12, inférieure par exemple. L'usinage est réalisé d'un coté du rotor puis de l'autre coté.

De plus, pendant chacune des deux phases de réalisation des gorges 70, les paires de gorges 70 peuvent être réalisées successivement les unes après les autres.

Ainsi, lors de l'étape d'usinage, la fraise utilisée pour réaliser les paires de gorges 70 parcourt une distance limitée autour du rotor 12 entre deux usinages de paires de gorges 70, la durée de l'étape d'usinage est alors réduite par rapport à une étape d'usinage conventionnelle selon laquelle toutes les paires de gorges 70 sont réalisées successivement et indépendamment de l'extrémité du rotor 12 au niveau de laquelle les gorges 70 sont débouchantes.

L'usinage des gorges de chaque coté du rotor peut aussi être réalisé simultanément avec un outillage comportant plusieurs fraises.

Il sera compris que l'invention n'est pas limitée aux modes de réalisation qui viennent d'être décrits en référence aux figures, et que le rotor 12 peut comporter un nombre différent d'aimants, et/ou que les aimants 62 peuvent être agencés différemment sur le rotor 12, sans sortir du domaine de l'invention tel que défini par les revendications.

## Revendications

1. Rotor (12) de machine électrique tournante qui comporte deux roues polaires (20) parallèles qui s'étendent radialement par rapport à un axe principal du rotor (12), dont chacune comporte une série de dents (30) axiales de forme globalement trapézoïdale comprenant une base 30a et un pointe 30b, qui s'étendent axialement depuis le bord d'extrémité radiale externe de la dite roue polaire (20), en direction de l'autre roue polaire (20), de manière que chaque dent (30) d'une roue polaire (20) est située dans l'espace existant entre deux dents (30) consécutives de l'autre roue polaire (20), le dit rotor (12) comporte des éléments magnétiques (62), dont chacun est agencé entre deux dents (30) adjacentes appartenant chacune à l'une des deux roues polaires (20), et est reçu en partie dans une gorge (70) réalisée dans chacune des faces latérales (68) en vis-à-vis des dites deux dents (30) adjacentes, dont au moins une est débouchante au niveau de la base (30a) de la dent (30),
**caractérisé en ce que** chacune des dites deux dents (30) adjacentes comporte une gorge (70) au maximum, qui est débouchante au niveau de la base (30a) de la dent (30).

2. Rotor (12) selon la revendication précédente, **caractérisé en ce que** chacune des dites deux dents (30) adjacentes comporte une gorge (70) réalisée uniquement dans une de ses faces latérales (68) située en vis-à-vis de la gorge (70) de la face latérale (68) de l'autre dent (30) des dites deux dents (30) adjacentes, et **en ce que** la gorge (70) qui est réalisée dans la dite face latérale (68) de la première dent (30) est débouchante au niveau de la base (30a) axiale de la première dent (30), et la gorge (70) qui est réalisée dans la dite face latérale (68) de la deuxième dent (30) desdites deux dents (30) adjacentes, est débouchante au niveau de la pointe (30b) axiale libre de la deuxième dent (30).

3. Rotor (12) selon la revendication 1, **caractérisé en ce que** les deux faces latérales (68) de la première dent (30) comportent chacune une gorge (70).

4. Rotor (12) selon la revendication précédente, **caractérisé en ce que** les deux gorges (70) qui sont réalisées dans les deux faces latérales (68) de la première dent (30), sont débouchantes au niveau de la pointe (30b) de la première dent (30).

5. Rotor (12) selon la revendication 3, **caractérisé en ce que** une première des deux gorges (70) qui sont réalisées dans les faces latérales (68) de la première dent (30), est débouchante au niveau de la base (30a) de la première dent (30), et la deuxième desdites deux gorges (70) qui sont réalisées dans les faces latérales (68) de la première dent (30), est débouchante au niveau de la pointe (30b) de la première dent (30).

6. Rotor (12) selon la revendication 3 ou 5, **caractérisé en ce que** chacune des deux faces latérales (68) de chaque dent (30) comporte une gorge (70) qui reçoit en partie un élément magnétique (62).

7. Rotor (12) selon l'une quelconque des revendications précédentes, **caractérisé en ce que** les deux gorges (70) qui sont réalisées dans les faces en vis-à-vis de deux dents (30) adjacentes, et qui reçoivent un même élément magnétique (62), sont toutes les deux débouchantes au niveau d'une même extrémité axiale du rotor (12).

8. Rotor (12) selon la revendication 7, **caractérisé en ce que** toutes les gorges (70) qui sont aptes à recevoir un élément magnétique (62) qui est situé entre une dent (30) d'une première roue polaire (20) et une dent (30) de la deuxième roue polaire (20) qui est située angulairement en amont de la dite dent (30) de la première roue polaire (20) sont débouchantes au niveau d'une première extrémité axiale du rotor (12), et **en ce que** toutes les gorges (70) qui sont aptes à recevoir un élément magnétique (62) qui est situé entre une dent (30) d'une première roue polaire (20) et une dent (30) de la deuxième roue polaire (20) qui est située angulairement en aval de la dite dent (30) de la première roue polaire (20) sont débouchantes au niveau d'une deuxième extrémité axiale du rotor (12).

9. Rotor (12) selon l'une quelconque des revendications 1 à 3 ou 5 à 8, **caractérisé en ce que** le nombre d'éléments magnétiques (62) est égal au nombre total de dents (30) du rotor (12).

10. Rotor (12) selon l'une quelconque des revendications 1 à 8, **caractérisé en ce que** le nombre d'éléments magnétiques (62) est inférieur au nombre total de dents (30) du rotor (12)

11. Rotor (12) selon la revendication précédente, **caractérisé en ce qu'**il comporte au moins une paire d'éléments magnétiques (62), dont chaque élément magnétique (62) de la paire est agencé, angulairement par rapport à l'axe principal du rotor (12), de part et d'autre de la première dent (30).

12. Rotor (12) selon la revendication 11, **caractérisé en ce que** le nombre d'éléments magnétiques (62) est égal au nombre de dents (30) que comporte une seule roue polaire (20), et **en ce que** chaque élément magnétique (62) est reçu entre une dent (30) d'une première roue polaire (20) et une dent (30) de la deuxième roue polaire (20) qui est située angulairement, par rapport à l'axe principal du rotor (12), en amont de la dite dent (30) de la première roue polaire (20).

13. Procédé de réalisation d'un rotor (12) qui comporte :
- une étape d'assemblage de deux roues polaires (20) de manière que chaque dent (30) d'une roue polaire (20) soit située dans l'espace existant entre deux dents (30) consécutives de l'autre roue polaire (20) ;
- une étape d'usinage des faces latérales (68) des dents (30) pour réaliser les gorges (70) recevant les éléments magnétiques (62), de manière que chacune des deux faces latérales (68) de chaque dent (30) comporte une gorge (70) qui est apte à recevoir en partie un élément magnétique (62) et,
- une étape de montage de chaque élément magnétique (62) dans deux gorges (70) qui sont réalisées dans les faces en vis-à-vis de deux dents (30) adjacentes,
**caractérisé en ce que** l'étape d'usinage comporte une première phase de réalisation des gorges (70) qui sont débouchantes au niveau d'une première extrémité axiale du rotor (12), puis une deuxième phase de réalisation des gorges (70) qui sont débouchantes au niveau d'une deuxième extrémité axiale du rotor (12) de sorte que deux dents (30) adjacentes ne comportent chacune au maximum qu'une gorge (70) débouchante au niveau de la base (30a) de la dent (30) et de sorte que deux dents (30) adjacentes comportent au moins une gorge (70) déboulante au niveau de la base (30a) de la dent (30).

14. Procédé selon la revendication précédente, **caractérisé en ce que** chaque phase de l'étape d'usinage consiste à réaliser simultanément les deux gorges (70) d'une paire de gorges (70), qui sont aptes à recevoir un même élément magnétique (62).

15. Procédé selon la revendication précédente, **caractérisé en ce que** chaque phase de l'étape d'usinage consiste à réaliser successivement les paires de gorges (70) qui sont débouchantes au niveau d'une même extrémité axiale du rotor (12).

## Claims

1. Rotor (12) of a rotary electrical machine which comprises two parallel polar wheels (20) which extend radially relative to a main axis of the rotor (12), each of which comprises a series of axial teeth (30) with a globally trapezoidal form, comprising a base 30a and tip 30b, which extend axially from the outer radial end edge of the said polar wheel (20), in the direction of the other polar wheel (20), such that each tooth (30) of a polar wheel (20) is situated in the gap which exists between two consecutive teeth (30) of the other polar wheel (20), the said rotor (12) comprises magnetic elements (62), each of which is arranged between two adjacent teeth (30) which each belong to one of the two polar wheels (20), and is received partly in a groove (70) which is provided in each of the opposite lateral surfaces (68) of the said two adjacent teeth (30), at least one of which opens at the level of the base (30a) of the tooth (30), **characterised in that** each of the said two adjacent teeth (30) comprises at the most one groove (70) which opens at the level of the base (30a) of the tooth (30).

2. Rotor (12) according to the preceding claim, **characterised in that** each of the said two adjacent teeth (30) comprises a groove (70) which is provided in only one of its lateral surfaces (68) which is situated opposite the groove (70) in the lateral surface (68) of the other tooth (30) of the said two adjacent teeth (30), and **in that** the groove (70) which is provided in the said lateral surface (68) of the first tooth (30) opens at the level of the axial base (30a) of the first tooth (30), and the groove (70) which is provided in the said lateral surface (68) of the second tooth (30) of the said two adjacent teeth (30) opens at the level of the free axial tip (30b) of the second tooth (30).

3. Rotor (12) according to claim 1, **characterised in that** the two lateral surfaces (68) of the first tooth (30) each comprise a groove (70).

4. Rotor (12) according to the preceding claim, **characterised in that** the two grooves (70) which are provided in the two lateral surfaces (68) of the first tooth (30) open at the level of the tip (30b) of the first tooth (30).

5. Rotor (12) according to claim 3, **characterised in that** a first one of the two grooves (70) which are provided in the lateral surfaces (68) of the first tooth (30) opens at the level of the base (30a) of the first tooth (30), and the second one of the said two grooves (70) which are provided in the lateral surfaces (68) of the first tooth (30) opens at the level of the tip (30b) of the first tooth (30).

6. Rotor (12) according to claim 3 or 5, **characterised in that** each of the two lateral surfaces (68) of each tooth (30) comprises a groove (70) which receives partly a magnetic element (62).

7. Rotor (12) according to any one of the preceding claims, **characterised in that** the two grooves (70) which are provided in the opposite surfaces of two adjacent teeth (30), and which receive a single magnetic element (62), both open at the level of a single axial end of the rotor (12).

8. Rotor (12) according to claim 7, **characterised in that** all the grooves (70) which can receive a magnetic element (62) which is situated between a tooth (30) of a first polar wheel (20) and a tooth (30) of the second polar wheel (20) which is situated angularly upstream from the said tooth (30) of the first polar wheel (20), open at the level of a first axial end of the rotor (12), and **in that** all the grooves (70) which can receive a magnetic element (62) which is situated between a tooth (30) of a first polar wheel (20) and a tooth (30) of the second polar wheel (20) which is situated angularly downstream from the said tooth (30) of the first polar wheel (20), open at the level of a second axial end of the rotor (12).

9. Rotor (12) according to any one of claims 1 to 3 or 5 to 8, **characterised in that** the number of magnetic elements (62) is equal to the total number of teeth (30) of the rotor (12).

10. Rotor (12) according to any one of claims 1 to 8, **characterised in that** the number of magnetic elements (62) is smaller than the total number of teeth (30) of the rotor (12).

11. Rotor (12) according to the preceding claim, **characterised in that** it comprises at least one pair of magnetic elements (62), each magnetic element (62) of the pair of which is arranged angularly relative to the main axis of the rotor (12), on both sides of the first tooth (30).

12. Rotor (12) according to claim 11, **characterised in that** the number of magnetic elements (62) is equal to the number of teeth (30) which a single polar wheel (20) comprises, and **in that** each magnetic element (62) is received between a tooth (30) of a first polar wheel (20) and a tooth (30) of the second polar wheel (20) which, relative to the main axis of the rotor (12), is situated angularly upstream from the said tooth (30) of the first polar wheel (20).

13. Method for production of a rotor (12) which comprises:
- a step of assembly of two polar wheels (20), such that each tooth (30) of a polar wheel (20) is situated in the gap which exists between two consecutive teeth (30) of the other polar wheel (20);
- a step of machining the lateral surfaces (68) of the teeth (30), in order to provide the grooves (70) which receive the magnetic elements (62), such that each of the two lateral surfaces (68) of each tooth (30) comprises a groove (70) which can receive partly a magnetic element (62); and
- a step of fitting each magnetic element (62) in two grooves (70) which are provided in the opposite surfaces of two adjacent teeth (30),
**characterised in that** the machining step comprises a first stage of production of the grooves (70) which open at the level of a first axial end of the rotor (12), then a second stage of production of the grooves (70) which open at the level of a second axial end of the rotor (12), such that two adjacent teeth (30) each comprise at the most one groove (70) which opens at the level of the base (30a) of the tooth (30), and such that two adjacent teeth (30) comprise at least one groove (70) which opens at the level of the base (30a) of the tooth (30).

14. Method according to the preceding claim, **characterised in that** each stage of the machining step consists of providing simultaneously the two grooves (70) of a pair of grooves (70), which can receive a single magnetic element (62).

15. Method according to the preceding claim, **characterised in that** each stage of the machining step consists of providing in succession the pairs of grooves (70) which open at the level of a single axial end of the rotor (12).

## Patentansprüche

1. Rotor (12) einer umlaufenden elektrischen Maschine, der zwei parallele Polräder (20) umfasst, die sich radial zu einer Hauptachse des Rotors (12) erstrecken und jeweils eine Reihe von im Wesentlichen trapezförmigen axialen Zacken (30) mit einer Basis 30a und einer Spitze 30b aufweisen, die sich axial vom äußeren radialen Endrand des besagten Polrads (20) in Richtung zu dem anderen Polrad (20) erstrecken, so dass jeder Zacken (30) eines Polrads (20) in dem bestehenden Raum zwischen zwei aufeinander folgenden Zacken (30) des anderen Polrads (20) liegt, wobei der besagte Rotor (12) magnetische Elemente (62) umfasst, die jeweils zwischen zwei benachbarten Zacken (30) jeweils eines der beiden Polräder (20) angeordnet sind und teilweise von einer Kehle (70) aufgenommen werden, die in jeder der gegenüberliegenden Seitenflächen (68) der besagten beiden benachbarten Zacken (30) ausgeführt ist und von denen mindestens eine an der Basis (30a) des Zackens (30) mündet, **dadurch gekennzeichnet, dass** jeder der besagten beiden benachbarten Zacken (30) höchstens eine Kehle (70) umfasst, die an der Basis (30a) des Zackens (30) mündet.

2. Rotor (12) nach dem vorhergehenden Anspruch, **dadurch gekennzeichnet, dass** jeder der besagten beiden benachbarten Zacken (30) eine Kehle (70) umfasst, die nur in einer seiner Seitenflächen (68) ausgeführt und gegenüber der Kehle (70) in der Seitenfläche (68) des anderen Zackens (30) der besagten beiden benachbarten Zacken (30) angeordnet ist, und **dass** die Kehle (70), die in der besagten Seitenfläche (68) des ersten Zackens (30) ausgeführt ist, an der axialen Basis (30a) des ersten Zackens (30) mündet und die Kehle (70), die in der besagten Seitenfläche (68) des zweiten Zackens (30) der besagten beiden benachbarten Zacken (30) ausgeführt ist, an der freien axialen Spitze (30b) des zweiten Zackens (30) mündet.

3. Rotor (12) nach Anspruch 1, **dadurch gekennzeichnet, dass** die beiden Seitenflächen (68) des ersten Zackens (30) jeweils eine Kehle (70) umfassen.

4. Rotor (12) nach dem vorhergehenden Anspruch, **dadurch gekennzeichnet, dass** die beiden Kehlen (70), die in den beiden Seitenflächen (68) des ersten Zackens (30) ausgeführt sind, an der Spitze (30b) des ersten Zackens (30) münden.

5. Rotor (12) nach Anspruch 3, **dadurch gekennzeichnet, dass** eine erste der beiden Kehlen (70), die in den Seitenflächen (68) des ersten Zackens (30) ausgeführt sind, an der Basis (30a) des ersten Zackens (30) mündet, und **dass** die zweite der besagten Kehlen (70), die in den Seitenflächen (68) des ersten Zackens (30) ausgeführt sind, an der Spitze (30b) des ersten Zackens (30) mündet.

6. Rotor (12) nach Anspruch 3 oder 5, **dadurch gekennzeichnet, dass** jede der beiden Seitenflächen (68) jedes Zackens (30) eine Kehle (70) umfasst, die ein magnetisches Element (62) teilweise aufnimmt.

7. Rotor (12) nach einem der vorhergehenden Ansprüche, **dadurch gekennzeichnet, dass** die beiden Kehren (70), die in den gegenüberliegenden Seiten von zwei benachbarten Zacken (30) ausgeführt sind und die dasselbe gleiche magnetische Element (62) aufnehmen, beide am selben axialen Ende des Rotors (12) münden.

8. Rotor (12) nach Anspruch 7, **dadurch gekennzeichnet, dass** alle Kehlen (70), die ein magnetisches Element (62) aufnehmen können, das zwischen einem Zacken (30) eines ersten Polrads (20) und einem Zacken (30) des zweiten Polrads (20) sitzt, der im Winkel vor dem besagten Zacken (30) des ersten Polrads (20) angeordnet ist, an einem ersten axialen Ende des Rotors (12) münden, und **dass** alle Kehlen (70), die ein magnetisches Element (62) aufnehmen können, das zwischen einem Zacken (30) eines ersten Polrads (20) und einem Zacken (30) des zweiten Polrads (20) sitzt, der im Winkel hinter dem besagten Zacken (30) des ersten Polrads (20) angeordnet ist, an einem zweiten axialen Ende des Rotors (12) münden.

9. Rotor (12) nach einem der vorhergehenden Ansprüche 1 bis 3 oder 5 bis 8, **dadurch gekennzeichnet, dass** die Anzahl der magnetischen Elemente (62) der Gesamtzahl der Zacken (30) des Rotors (12) entspricht.

10. Rotor (12) nach einem der vorhergehenden Ansprüche 1 bis 8, **dadurch gekennzeichnet, dass** die Anzahl der magnetischen Elemente (62) geringer ist als die Gesamtzahl der Zacken (30) des Rotors (12).

11. Rotor (12) nach dem vorhergehenden Anspruch, **dadurch gekennzeichnet, dass** er mindestens ein Paar magnetischer Elemente (62) umfasst, wobei jedes magnetische Element (62) des Paares im Winkel zur Hauptachse des Rotors (12) auf jeweils einer Seite des ersten Zackens (30) angeordnet ist.

12. Rotor (12) nach Anspruch 11, **dadurch gekennzeichnet, dass** die Anzahl der magnetischen Elemente (62) der Anzahl der Zacken (30) entspricht, die auf einem einzigen Polrad (20) sitzen, und **dass** jedes magnetische Element (62) zwischen einem Zacken (30) eines ersten Polrads (20) und einem Zacken (30) des zweiten Polrads (20) sitzt, der im Winkel zur Hauptachse des Rotors (12) vor dem besagten Zacken (30) des ersten Polrads (20) angeordnet ist.

13. Verfahren zur Ausführung eines Rotors (12), das umfasst
- eine Phase des Zusammenbaus von zwei Polrädern (20), so dass jeder Zacken (30) eines Polrads (20) in dem bestehenden Raum zwischen zwei aufeinander folgenden Zacken (30) des anderen Polrads (20) sitzt,
- eine Phase der Bearbeitung der Seitenflächen (68) der Zacken (30) zur Ausführung der Kehlen (70), die die magnetischen Elemente (62) aufnehmen, so dass jede der beiden Seitenflächen (68) jedes Zackens (30) eine Kehle (70) umfasst, die ein magnetisches Element (62) teilweise aufnehmen kann, und
- eine Phase des Einbaus jedes magnetischen Elements (62) in zwei Kehlen (70), die in den gegenüberliegenden Seitenflächen von zwei benachbarten Zacken (30) ausgeführt sind,
**dadurch gekennzeichnet, dass** die Phase der Bearbeitung eine erste Phase der Ausführung der Kehlen (70) umfasst, die an einem ersten axialen Ende des Rotors (12) münden, und eine zweite Phase der Ausführung der Kehlen (70), die an einem zweiten axialen Ende des Rotors (12) münden, so dass zwei benachbarte Zacken (30) jeweils nicht mehr als höchstens eine Kehle (70) umfassen, die an der Basis (30a) des Zackens (30) mündet, und so dass zwei benachbarte Zacken (30) mindestens eine Kehle (70) umfassen, die an der Basis (30a) des Zackens (30) mündet.

14. Verfahren nach dem vorhergehenden Anspruch, **dadurch gekennzeichnet, dass** jede Phase der Bearbeitung in der gleichzeitigen Ausführung der beiden Kehlen (70) eines Paares von Kehlen (70) besteht, die dasselbe magnetische Element (62) aufnehmen können.

15. Verfahren nach dem vorhergehenden Anspruch, **dadurch gekennzeichnet, dass** jede Phase der Bearbeitung in der aufeinander folgenden Ausführung der Paare von Kehlen (70) besteht, die an demselben axialen Ende des Rotors (12) münden.
